# EUROPÄISCHE PATENTSCHRIFT

(11) **EP 1 616 773 B1**
(45) Veröffentlichungstag und Bekanntmachung des Hinweises auf die Patenterteilung: **30.07.2008**
(21) Anmeldenummer: 05012075.7
(22) Anmeldetag: 04.06.2005
(51) Int. Cl.: B62D 5/00, F16H 1/28, F16H 57/12

(54) **Getriebe für eine Aktivlenkung für Fahrzeuge**
Transmission for an active steering system for vehicles
Transmission pour un système actif de direction pour véhicules

(30) Priorität: 15.07.2004 DE 102004034099
(43) Veröffentlichungstag der Anmeldung: 18.01.2006
(73) Patentinhaber: ZF FRIEDRICHSHAFEN AG, 88038 Friedrichshafen (DE)
(72) Erfinder: Staiger, Kai, 88045 Friedrichshafen (DE); Meyer, Andreas, 88074 Meckenbeuren (DE)

(56) Entgegenhaltungen:
- DE-A1- 4 304 664
- DE-A1- 4 325 295
- DE-A1- 10 204 736
- DE-A1- 10 239 968
- DE-A1- 19 525 831
- DE-A1- 19 720 255
- DE-A1- 19 756 967
- DE-A1- 19 928 385
- FR-A- 2 606 480

## Beschreibung

Die Erfindung betrifft ein Getriebe für eine Aktivlenkung für Fahrzeuge gemäß dem Oberbegriff des Patentanspruches 1.

Derartige Getriebe werden in modernen Kraftfahrzeugen eingesetzt, um beispielsweise den vom Fahrer des Kraftfahrzeuges über das Lenkrad eingegebenen Lenkwinkel bei Bedarf in Abhängigkeit von der augenblicklichen Fahrsituation zu korrigieren. Wenn beispielsweise durch am Fahrzeug angeordnete Lage- oder Beschleunigungssensoren festgestellt wird, dass ein vom Fahrer eingegebener Lenkwinkel zu einer gefährlichen Übersteuerungssituation führt, dann wird dieser Lenkwinkel durch die Aktivlenkung im Sinne einer Aufhebung der gefährlichen Situation korrigiert, d. h. im Falle einer Übersteuerungssituation verringert.

Im folgenden wird zunächst das Funktionsprinzip eines Getriebes der im Oberbegriff bezeichneten Art beschrieben:

Das mit der Eingangswelle verbundene Sonnenrad des Getriebes treibt die in dem zunächst festgehaltenen Planetenradträger gelagerten Planetenräder über die diesem Sonnenrad zugeordneten Abschnitte an. Die Planetenräder treiben ihrerseits ein mit der Ausgangswelle verbundenes zweites Sonnenrad des Getriebes über die diesen zugeordnete Abschnitte an. Über die jeweilige Auslegung der Sonnenräder und der diesen zugeordnete Abschnitte der Planetenräder kann das Übersetzungs- bzw. Untersetzungsverhältnis bestimmt werden. Der Drehwinkel der Ausgangswelle steht dabei stets in einem durch diese Auslegung festgelegten Verhältnis zum Drehwinkel der Eingangswelle. Durch eine aktive Verdrehung des Planetenradträgers kann der Ausgangswelle eine zusätzliche positive oder negative Drehung überlagert werden, d. h. der Drehwinkel der Ausgangswelle kann gegenüber dem über die Eingangswelle eingegebenen Drehwinkel vergrößert oder verkleinert werden. Die aktive Verdrehung des Planetenradträgers erfolgt dabei über einen gesonderten Antrieb.

Aus der DE 102 04 736 A1 ist bereits ein Getriebe der im Oberbegriff des Anspruches 1 genannten Art bekannt, bei welchem bei einer Ausführungsform das mit der Eingangswelle verbundene Sonnenrad und das mit der Ausgangswelle verbundene Sonnenrad jeweils Kegelräder sind, die mit den Planetenrädern im Eingriff stehen. Die Sonnenräder haben unterschiedliche Durchmesser. Die als Kegelräder ausgebildeten Planetenräder sind als Stufenräder ausgebildet, deren Abschnitte in Anpassung an die Durchmesser der Sonnenräder ebenfalls unterschiedliche Durchmesser haben.

Für eine präzise Funktion eines derartigen Getriebes ist es von besonderer Bedeutung, dass das Verdrehspiel zwischen den zusammenwirkenden Zahnrädern möglichst gering ist oder verschwindet. Bei dem bekannten Getriebe wird Spielfreiheit dadurch erreicht, dass die Planetenräder federnd an die Verzahnungen der Sonneräder andrückbar sind. Die Kegelräder, bestehend aus den Sonnenrädern und den als Stufenräder ausgebildeten Planetenrädern nehmen einen verhältnismäßig großen Bauraum ein und sind zudem aufwendig herzustellen.

Dem Stand der Technik (DE 199 28 385 A1, DE 195 25 831 A1) sind ferner sogenannte Wolfrom-Getriebe als bekannt zu entnehmen, die bei Industrierobotern eingesetzt werden. Diese Getriebe weisen eine große Übersetzung auf und sind überaus präzise gefertigt und entsprechend kostenaufwendig. Abgesehen davon, dass der Ausgangswelle keine zusätzliche Drehung überlagert wird, sind derartige Getriebe für eine kostengünstige Herstellung in großen Stückzahlen für den Einsatz in der Automobiltechnik nicht bestimmt und geeignet.

Vor diesem Hintergrund liegt der Erfindung die Aufgabe zugrunde, ein Getriebe der im Oberbegriff des Anspruches 1 genannten Art zu schaffen, welches konstruktiv, herstellungstechnisch und montagetechnisch einfacher als das bekannte Getriebe ist.

Die Lösung dieser Aufgabe ergibt sich aus den Merkmalen des Hauptanspruches, während vorteilhafte Ausgestaltungen und Weiterbildungen der Erfindung den Unteransprüchen entnehmbar sind.

Die Erfindung und die hieraus resultierenden Vorteile sind in der nachfolgenden Beschreibung anhand der Zeichnungen weiter erläutert. Hierbei zeigen:
- Fig. 1: schematisch ein Planetenradgetriebe mit als Doppelkegelräder ausgebildeten Planetenrädern, einem zylindrischen Sonnenrad und einem kegelförmigen Sonnenrad,
- Fig. 2: schematisch eine Ansicht der Anordnung der Fig. 1 in Richtung des Pfeiles II und
- Fig. 3: eine Skizze zur Erläuterung der Winkelverhältnisse bei einer Anordnung gemäß der Fig. 1.

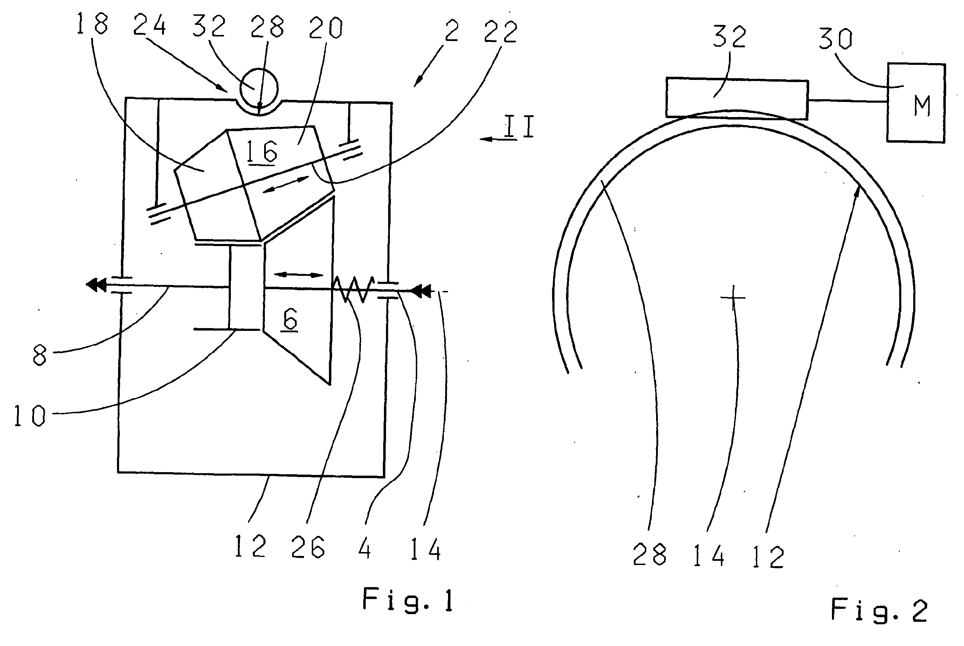

Das in Fig. 1 dargestellte Getriebe 2 hat eine Eingangswelle 4, auf der ein kegelförmiges Sonnenrad 6 axial verschiebbar, jedoch drehfest angeordnet ist. Das Getriebe 2 weist ferner eine zur Eingangswelle 4 koaxiale Ausgangswelle 8 auf, mit der ein zylindrisches Sonnenrad 10 drehfest und axial unverschiebbar verbunden ist. Die beiden Sonnenräder 6, 10 weisen unterschiedliche Durchmesser auf.

Ein Planetenradträger 12 ist um die gemeinsame Drehachse (Zentralachse 14) der Eingangswelle 4 und der Ausgangswelle 8 drehbar gelagert. In dem Planetenradträger 12 sind in an sich bekannter Weise mehrere, vorzugsweise drei Planetenräder um ihre Planetenradachsen 22 drehbar gelagert, die mit den Sonnenrädern 6 und 10 zusammenwirken. In Fig. 1 ist aus Gründen einer vereinfachten Darstellung nur ein Planetenrad 16 dargestellt.

Das Planetenrad 16 hat einen ersten Kegelradabschnitt 18, welcher mit dem zylindrischen Sonnenrad 10 im Eingriff ist, und einen zweiten Kegelradabschnitt 20, welcher mit dem kegelförmigen Sonnenrad 6 im Zahneingriff steht. Das Planetenrad 16 ist in Richtung der Planetenradachse 22 schwimmend gelagert, so dass es sich in einem gewissen Maß axial verschieben kann.

Der Planetenradträger 12 ist mit einem Drehantrieb 24 verbunden, mittels dessen der Planetenradträger 12 um die Zentralachse 14 verdreht werden kann.

Wie Fig. 1 erkennen lässt, ist das kegelförmige Sonnenrad 6 auf der zugeordneten Eingangswelle 4 axial verschiebbar angeordnet. Es wird durch eine Feder 26 an den zugeordneten zweiten Kegelradabschnitt 20 federnd angestellt, womit ein Spiel zwischen dem Sonnenrad 6 und dem zweiten Kegelradabschnitt 20 des Planetenrades 16 ausgeschaltet wird. Da die Planetenradachse 22 axial schwimmend gelagert ist, kann das Planetenrad 16 in Fig. 1 nach links ausweichen, wobei infolge der Schrägstellung der Planetenradachse 22 auch eine Zustellung des Kegelradabschnittes 18 radial auf das zylindrische Sonnenrad 10 zu erfolgt, so dass auch ein gegebenenfalls vorhandenes Spiel zwischen dem ersten Kegelradabschnitt 18 und dem zylindrischen Sonnenrad 10 ausgeschaltet wird.

Die Funktion der in Fig. 1 dargestellten Anordnung ist wie folgt: Im normalen Fahrbetrieb wird ein über ein Lenkrad eingegebener Lenkwinkel über die Eingangswelle 4, das Sonnenrad 6, das Planetenrad 16, das Sonnenrad 10 und die Ausgangswelle 8 mit einem bestimmten, durch die Geometrie des Getriebes 2 festgelegten Übersetzungsverhältnis auf die gelenkten Räder übertragen. Dabei wird der Planetenradträger 12 von dem nicht aktivierten Drehantrieb 24 festgehalten.

Wenn beispielsweise durch am Fahrzeug angeordnete Lage- oder Beschleunigungssensoren festgestellt wird, dass der vom Fahrer eingegebene Lenkausschlag zu einer gefährlichen Fahrsituation, beispielsweise zum Übersteuern führt, dann wird in Abhängigkeit von den Signalen der Sensoren der Drehantrieb 24 aktiviert und der Planetenradträger 12 in einem Sinne gedreht, dass der vom Fahrer eingegebene Lenkwinkel korrigiert, also im Falle eines Übersteuerns verringert wird.

Der Drehantrieb 24 ist im dargestellten Ausführungsbeispiel als Schnecke-/Schneckenradgetriebe ausgebildet. Wie Fig. 2 erkennen lässt, hat der Planetenradträger 12 - in Richtung des Pfeiles II gesehen - im wesentlichen einen kreisförmigen Umfang. Über einen Teil oder über den gesamten Umfang des Planetenradträgers 12 erstreckt sich ein Schneckenrad 28, welches mit einer zu dieser etwa tangential angeordneten, mit einem Antriebsmotor 30 verbundenen Schnecke 32 zusammenwirkt. Durch Verdrehen des Planetenradträgers 12 so wird auf die Ausgangswelle 8 unabhängig von dem über die Eingangswelle 4 eingegebenen Drehwinkel ein bestimmter, durch die Getriebegeometrie vorgegebener Drehwinkel übertragen.

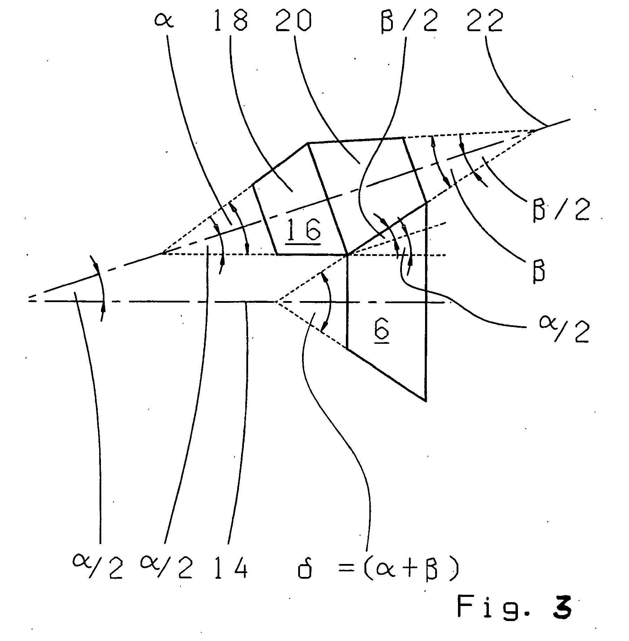

Fig. 3 zeigt schematisch die Winkelverhältnisse bei einer Getriebeanordnung gemäß der Fig. 1. Der erste Kegelradabschnitt 18 hat einen Kegelwinkel α und der zweite Kegelradabschnitt 20 hat einen Kegelwinkel β. Wenn die Kegelradachse 22 entsprechend einem Winkel α/2 gegen die Zentralachse 14 geneigt wird, dann ist die in Fig. 4 untere Mantellinie des Kegelradabschnittes 18 parallel zur Zentralachse 14, so dass der Kegelradabschnitt 18 mit einem zylindrischen Sonnenrad zusammenwirken kann. Die untere Mantellinie des Kegelradabschnittes 20 ist gegenüber der Zentralachse 14 entsprechend einem Winkel geneigt, der sich aus dem Kegelwinkel des Kegelradabschnittes 20 und der Neigung der Kegelradachse 22 ergibt. Wie Fig. 3 erkennen lässt, hat er den Betrag α/2 + β/2. Ein mit dem zweiten Kegelradabschnitt 20 zusammenwirkendes kegelförmiges Sonnenrad 6 muss demnach einen Kegelwinkel δ = α + β aufweisen, wie sich aus der Zeichnung leicht ableiten lässt.

## Patentansprüche

1. Getriebe für eine Aktivlenkung für Fahrzeuge, umfassend ein Zahnrad-Planetengetriebe mit einem mit einer Eingangswelle verbundenen Sonnenrad und einem dazu koaxialen, mit einer Ausgangswelle verbundenen Sonnenrad sowie Planetenrädern, welche in einem um die gemeinsame Drehachse (Zentralachse) der Sonnenräder drehbar angeordneten Planetenradträger drehbar gelagert sind und als Doppelkegelräder mit zwei Kegelradabschnitten ausgebildet sind, deren einer Kegelradabschnitt mit einem der Sonnenräder und deren anderer Kegelradabschnitt mit dem anderen Sonnenrad im Eingriff ist, wobei der Planetenradträger mit einem Drehantrieb gekoppelt ist, um einer über die Eingangswelle erzeugten Drehung der Ausgangswelle eine zusätzliche Drehung zu überlagern, **dadurch gekennzeichnet, dass** ein Kegelradabschnitt (18) mit einem zylindrischen Sonnenrad (10) und der andere Kegelradabschnitt (20) mit einem kegelförmigen Sonnenrad (6) zusammenwirkt, wobei der erste Kegelradabschnitt (18) einen ersten Kegelwinkel (α) und der zweite Kegelradabschnitt (20) einen zweiten Kegelwinkel (β) aufweist und die Planetenradachsen (22) mit ihrem dem zylindrischen Sonnenrad (10) zugeordneten Ende entsprechend dem halben Kegelwinkel (α/2) gegen die Zentralachse (14) geneigt sind, und dass das kegelförmige Sonnenrad (6) einen Kegelwinkel (δ) hat, welcher gleich der Summe aus erstem Kegelwinkel (α) und zweitem Kegelwinkel (β) ist.

2. Getriebe nach Anspruch 1, **dadurch gekennzeichnet, dass** die Planetenradachsen (22) gegenüber der Zentralachse (14) geneigt sind.

3. Getriebe nach den Ansprüchen 1 und 2, **dadurch gekennzeichnet, dass** die Kegelwinkel (α bzw. β) der Kegelradabschnitte (18 bzw. 20) unterschiedlich sind.

4. Getriebe nach Anspruch 1, **dadurch gekennzeichnet, dass** ein Kegelradabschnitt (20) der Planetenräder (16) mit dem kegelförmigen, federnd angestellten Sonnenrad (6) im Zahneingriff steht.

## Claims

1. Mechanism for the active steering of vehicles, comprising a planetary gear with a center gear connected to an input shaft and a coaxially linked center gear connected to an output shaft, and planet gears which are rotatably supported in a planet carrier which is rotatably arranged around the common axis of rotation (central axis) of the center gears and are designed as dual bevel gears with two bevel gear sections, with one bevel gear section meshing with one of the center gears and the other bevel gear section meshing with with the other center gear, with the planet carrier being linked to a rotary drive for an additional rotation to be superimposed on the rotation of the output shaft generated via the input shaft, **characterized in that** one bevel gear section (18) interacts with a cylindrical center gear (10) and the other bevel gear section (20) interacts with a conical center gear (6), with the first bevel gear section (18) featuring a first taper angle (α) and the second bevel gear section (20) featuring a second taper angle (ß), and with the planet gear axes (22), with their ends arranged towards the cylindrical center gear (10), being inclined in accordance with the half taper angle (α/2) towards the central axis (14), and that the conical center gear (6) features a taper angle (δ) which is equivalent to the sum of the first taper angle (α) and the second taper angle (β).

2. Mechanism according to claim 1, **characterized in that** the planet gear axes (22) are inclined towards the central axis (14).

3. Mechanism according to claims 1 and 2, **characterized in that** the taper angles (α or ß) of the bevel gear sections (18 or 20) are different.

4. Mechanism according to claim 1, **characterized in that** one bevel gear section (20) of the planet gears (16) meshes with the conical, spring-mounted center gear (6).

## Revendications

1. Transmission pour une direction active pour véhiculés, comprenait une boîte à trains épicycloïdaux avec un pignon planétaire lié à un arbre d'entrée et un pignon planétaire étant disposé coaxialement par rapport à ce dernier et lié à un arbre de sortie ainsi que de satellites, ceux-ci étant montés à rotation dans un arbre porte-satellites logé à rotation autour de l'axe de rotation commun (axe central) des pignons planétaires et ceux-ci étant réalisés comme pignons coniques doubles avec deux sections de pignons coniques, dont rune des sections de pignons coniques est en prise avec un des pignons planétaires et dont l'autre des sections de pignons coniques est en prise avec l'autre pignon planétaire, sachant que l'arbre porte-satellites est couplé à un mécanisme de rotation, afin de superposer à une rotation de l'arbre de sortie créée par l'arbre d'entrée une rotation supplémentaire, **caractérisée en ce que** une section de pignon conique (18) coopère avec un pignon planétaire cylindrique (10) et l'autre section de pignon conique (20) coopère avec un pignon planétaire conique (6), sachant que la première section de pignon conique (18) comporte un premier angle conique (α) et la deuxième section de pignon conique (20) comporte un deuxième angle conique (ß) et **en ce que** les axes des satellites (22) sont inclinés contre l'axe central (14) avec leur extrémité étant orientée vers le pignon planétaire cylindrique (10) correspondant au demi-angle conique (α/2), et **en ce que** le pignon planétaire conique (6) comporte un angle conique (δ), celui-ci étant égal à la somme du premier angle conique (α) et du deuxième angle conique (ß).

2. Transmission selon la revendication 1, **caractérisée en ce que** les axes des satellites (22) sont inclinés par rapport à l'axe central (14).

3. Transmission selon les revendications 1 et 2, **caractérisée en ce que** les angles coniques (α ou ß) des sections de pignons coniques (18 ou 20) sont différents.

4. Transmission selon la revendication 1, **caractérisée en ce que** une section de pignon conique (20) des satellites (16) est en prise avec le pignon planétaire conique (6) monté sur ressort.
